(19)
Europäisches
Patentamt
European
Patent Office
Office européen
des brevets

(11) **EP 4 342 934 A1**

(12) **EUROPEAN PATENT APPLICATION**
published in accordance with Art. 153(4) EPC

(43) Date of publication:
**27.03.2024   Bulletin 2024/13**

(21) Application number: **22842524.5**

(22) Date of filing: **18.07.2022**

(51) International Patent Classification (IPC):
$C08J\ 3/24^{(2006.01)}$        $C08J\ 9/04^{(2006.01)}$
$C08F\ 220/06^{(2006.01)}$        $C08K\ 9/04^{(2006.01)}$

(52) Cooperative Patent Classification (CPC):
**C08F 220/06; C08J 3/24; C08J 9/04; C08K 9/04**

(86) International application number:
**PCT/KR2022/010412**

(87) International publication number:
**WO 2023/287262 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **16.07.2021   KR 20210093471
15.07.2022   KR 20220087601**

(71) Applicant: **LG Chem, Ltd.
Yeongdeungpo-gu
Seoul 07336 (KR)**

(72) Inventors:
• **JEONG, Woongchan
Daejeon 34122 (KR)**

• **KIM, Yeonsoo
Daejeon 34122 (KR)**
• **HAN, Chang Hun
Daejeon 34122 (KR)**
• **SOHN, Jungmin
Daejeon 34122 (KR)**
• **LEE, Myunghan
Daejeon 34122 (KR)**
• **LEE, Hyemin
Daejeon 34122 (KR)**
• **RYU, Jihye
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **PREPARATION METHOD OF SUPER ABSORBENT POLYMER**

(57)     Provided is a method of preparing a superabsorbent polymer. More particularly, provided is a method of preparing a superabsorbent polymer, in which a multi-step foaming process using a foam stabilizer is performed to form a hierarchical bubble distribution in the superabsorbent polymer to be prepared, thereby preparing the superabsorbent polymer having excellent absorption rate and absorption performance.

[Fig 1]

**EP 4 342 934 A1**

**Description**

[Technical Field]

Cross-reference to Related Application

The present application is based on, and claims priority from, Korean Patent Application Nos. 10-2021-0093471, and 10-2022-0087601, filed on July 16, 2021, and July 15, 2022, respectively, the disclosures of which are hereby incorporated by reference herein in their entirety.

The present invention relates to a method of preparing a superabsorbent polymer. More particularly, the present invention relates to a method of preparing a superabsorbent polymer, in which a multi-step foaming process using a foam stabilizer is performed to form a hierarchical bubble distribution in the superabsorbent polymer to be prepared, thereby preparing the superabsorbent polymer having excellent absorption rate and absorption performance.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in sanitary products, now they have been widely used for water retaining soil products for gardening, water stop materials for the civil engineering and construction, sheets for raising seedling, fresh-keeping agents for food distribution fields, materials for poultice or the like.

These superabsorbent polymers are widely used in sanitary materials such as diapers, sanitary pads, etc. Inside the sanitary materials, the superabsorbent polymer is generally distributed throughout pulp. However, recent efforts have been continuously made to provide thinner sanitary materials such as diapers having a thinner thickness, etc., and as part of that, diapers having a reduced content of pulp, and furthermore, diapers having no pulp, so-called pulpless diapers are actively under development.

In sanitary materials, in which the pulp content is reduced or no pulp is used, such as pulpless diapers, a superabsorbent polymer is required to exhibit not only high absorption performance but also a high absorption rate because it should perform not only the role of an absorbent for absorbing liquids such as urine, etc., but also the role of pulp.

In order to prepare the superabsorbent polymer having such an improved absorption rate, a method of improving a specific surface area by introducing a pore structure into the superabsorbent polymer is mainly used. Specifically, in order to improve the specific surface area of the superabsorbent polymer, a foaming agent is used in a polymerization step to generate bubbles or a gas such as carbon dioxide gas, air, or nitrogen gas, etc. may be injected.

However, since bubbles generated by the foaming agent are unstable in a neutralization solution, the bubbles easily escapes out of the neutralization solution, and in particular, it is difficult to control the size of the bubbles, which makes it impossible to prepare a superabsorbent polymer having a desired pore structure.

Accordingly, there is a continuous demand for the development of a superabsorbent polymer exhibiting a high absorption rate while maintaining basic absorption performances of the superabsorbent polymer.

[Disclosure]

[Technical Problem]

Accordingly, there is provided a method of preparing a superabsorbent polymer, in which a multi-step foaming process using a foam stabilizer is performed to form a hierarchical pore distribution in the superabsorbent polymer to be prepared, thereby preparing the superabsorbent polymer having improved absorption properties and absorption rate.

[Technical Solution]

To solve the above problem, there is provided a method of preparing a superabsorbent polymer, the method including the steps of:

preparing a monomer composition including a water-soluble acrylic acid-based monomer having acidic groups of which at least part is neutralized, a polymerization initiator, and a first crosslinking agent;
performing a first foaming of a mixture which is obtained by mixing the monomer composition with a first foaming agent and a foam stabilizer;
performing a second foaming of a mixture which is obtained by mixing the first foamed mixture with a second foaming agent;
forming a water-containing gel polymer by crosslinking-polymerizing the second foamed mixture;
forming a base polymer powder by drying, pulverizing, and classifying the water-containing gel polymer; and
crosslinking at least part of the surface of the base polymer powder in the presence of a surface crosslinking agent.

[Effect of the Invention]

According to a method of preparing a superabsorbent polymer of the present invention, a multi-step foaming process using a foaming agent and a foam stabilizer is performed to easily generate different sizes of bubbles in respective steps, and as a result, a hierarchical pore distribution is formed inside a superabsorbent polymer which is finally prepared through processes such as drying, pulverizing, etc., thereby increasing its specific surface area and remarkably improving absorption properties and absorption rate of the superabsorbent polymer.

[Detailed Description of the Embodiments]

FIG. 1 shows a schematic illustration of a multi-step foaming process in a method of preparing a superabsorbent polymer according to one embodiment of the present invention;
FIG. 2 shows OM images of bubbles generated under conditions of a first foaming process and a second foaming process of Example 1;
FIG. 3 shows graphs showing the size of bubbles generated according to concentration changes of a foam stabilizer in a multi-step foaming process of Example 1 and changes in the size of pores after curing;
FIG. 4 shows a graph showing pore size distributions inside superabsorbent polymers prepared according to Example 1 and Comparative Example 1;
FIG. 5 shows schematic illustrations of cross-sectional images of superabsorbent polymers prepared according to Example 1, Comparative Example 1, and Comparative Example 4; and
FIG. 6 shows cross-sectional SEM images of superabsorbent polymers prepared according to Example 1, Comparative Example 1, and Comparative Example 4.

[Best Mode for Carrying Out the Invention]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

As used herein, the term "polymer" refers to a polymerized state of an acrylic acid-based monomer, which is a water-soluble ethylenically unsaturated monomer, and may include all water content ranges or particle diameter ranges. Among the above polymers, a polymer having a water content (moisture content) of about 40% by weight or more in a state after polymerizing before drying may be referred to as a water-containing gel polymer, and particles obtained by pulverizing and drying such a water-containing gel polymer may be referred to as a crosslinked polymer.

Further, as used herein, the term "superabsorbent polymer particle" refers to a particulate material including a crosslinked polymer which is obtained by polymerizing an acrylic acid-based monomer including acidic groups of which at least part is neutralized, and then crosslinking the same by an internal crosslinking agent.

Further, as used herein, the term "superabsorbent polymer" refers to, depending on the context, a crosslinked polymer obtained by polymerizing an acrylic acid-based monomer including acidic groups of which at least part is neutralized, or a base polymer in the form of powder consisting of superabsorbent polymer particles obtained by pulverizing the crosslinked polymer, or is used to encompass those made suitable for commercialization by performing an additional process on the crosslinked polymer or the base polymer, for example, surface crosslinking, re-assembling of fine particles, drying, pulverizing, classifying, etc. Therefore, the term "superabsorbent polymer" may be interpreted as including a plurality of superabsorbent polymer particles.

Further, the term "bubble" refers to the spherical space formed by foamed gas generated in a mixture during a foaming process, and the term "pore" refers to the spherical space formed in the water-containing gel polymer, base polymer, or superabsorbent polymer by curing the bubbles.

Further, the term "average diameter" of pore or bubble refers to a median of the longest diameter value of each pore or bubble to be measured. This is to be less affected by outlier than the simple average.

The present invention may be variously modified and have various forms, and specific exemplary embodiments are exemplified and explained in detail in the following description. However, it is not intended to limit the present invention to the specific exemplary embodiments and it must be understood that the present invention includes every modifications, equivalents, or replacements included in the spirit and technical scope of the present invention.

Further, the technical terms used in this description are just for explaining specific exemplary embodiments and it is not intended to restrict the present invention. The singular expression used herein may include the plural expression unless it is differently expressed contextually.

In order to prepare a superabsorbent polymer with a high absorption rate, the specific surface area in the superabsorbent polymer particles should be increased. Therefore, in order to realize a superabsorbent polymer having a high specific surface area, a method of forming a number of pores in the superabsorbent polymer by inducing a foaming process during the preparation process or a method of mechanically modifying the superabsorbent polymer has been used. In particular, the size of the pores to be generated varies depending on how the foaming mechanism is controlled, and thus final particles after pulverizing have different shapes. In order to increase the specific surface area, it is preferable to include a large number of micropores in the pulverized particles. However, since bubbles generated by the traditional foaming process are unstable in a neutralization solution, the bubbles easily escapes out of the neutralization solution, and in particular, it is difficult to control the size of the bubbles, which makes it impossible to prepare a superabsorbent polymer having a desired pore structure.

Accordingly, the present inventors found that when a superabsorbent polymer is prepared, a multi-step foaming process using a foaming agent and a foam stabilizer is performed to stably generate different sizes of bubbles in each step, and thus a hierarchical pore structure may be formed inside the superabsorbent polymer which is finally prepared through processes such as drying, pulverizing, etc., thereby completing the present invention.

In particular, it was confirmed that it is easy to control the size of the bubbles generated in each foaming step by controlling the concentration of the foam stabilizer used together with the foaming agent in the multi-step foaming process. Accordingly, in order to form a more stable pore structure, the components of the foam stabilizer used in the foaming process and the optimal concentration of the foam stabilizer for each foaming step were derived.

**Method of preparing superabsorbent polymer**

Hereinafter, each step of a method of preparing superabsorbent polymer particles according to one embodiment will be described.

(Step of preparing monomer composition)

First, according to one embodiment of the present invention, the step of preparing a monomer composition including a water-soluble acrylic acid-based monomer having acidic groups of which at least part is neutralized, a polymerization initiator, and a first crosslinking agent is included.

The acrylic acid-based monomer is a compound represented by the following Formula 1:

$$[\text{Formula 1}] \qquad R^1\text{-COOM}^1$$

in Formula 1,

$R^1$ is a C2 to C5 alkyl group having an unsaturated bond, and

$M^1$ is a hydrogen atom, a monovalent or divalent metal, an ammonium group, or an organic amine salt.

Preferably, the acrylic acid-based monomer includes one or more selected from the group consisting of acrylic acid, methacrylic acid, and a monovalent metal salt, a divalent metal salt, an ammonium salt, and an organic amine salt thereof.

Herein, the acrylic acid-based monomer may be those having acidic groups of which at least part is neutralized. Preferably, the monomers may be those partially neutralized with an alkali substance such as sodium hydroxide, potassium hydroxide, ammonium hydroxide, etc. In this regard, a degree of neutralization of the acrylic acid-based monomer may be 40 mol% to 95 mol%, preferably, 40 mol% or more, 60 mol% or more, 70 mol% or more, and 95 mol% or less, 90 mol% or less, 85 mol% or less, or 40 to 90 mol%, 60 to 85 mol%, 70 to 85 mol%. However, an excessively high degree of neutralization causes the neutralized monomers to be precipitated, and thus polymerization may not readily occur, whereas an excessively low degree of neutralization not only greatly deteriorates the absorbency of the polymer, but also endows the polymer with hard-to-handle properties, such as those of an elastic rubber.

The concentration of the acrylic acid-based monomer may be 20% by weight to 60% by weight, preferably, 20% by weight or more, 40% by weight or more, and 60% by weight or less, 50% by weight or less, or 40% by weight to 50% by weight with respect to the monomer composition including the raw materials of the superabsorbent polymer and a solvent, and the concentration may be selected from appropriate concentrations in consideration of polymerization time, reaction conditions, etc. However, when the concentration of the monomer is excessively low, the yield of the superabsorbent polymer may become low and there may be a problem in economic efficiency. On the contrary, when the concentration of the monomer is excessively high, there may be a process problem in that part of the monomers is precipitated, or pulverization efficiency is lowered upon pulverization of the polymerized water-containing gel polymer, and the physical properties of the superabsorbent polymer may be deteriorated.

As used herein, the term 'first crosslinking agent' is used to distinguish it from the second crosslinking agent for mainly crosslinking the surface of the superabsorbent polymer particle, described later, and functions to polymerize the above-described water-soluble ethylenically unsaturated monomers by crosslinking unsaturated bonds thereof. The crosslinking in the above step is performed regardless of surface or internal crosslinking. However, when the surface crosslinking process of the superabsorbent polymer particles to be described later is performed, the particle surface of the superabsorbent polymer finally prepared has a crosslinked structure by the second crosslinking agent, and the inside thereof has a crosslinked structure by the first crosslinking agent.

As the first crosslinking agent, any compound is applicable as long as it enables introduction of crosslinkage during polymerization of the acrylic acid-based unsaturated monomer. Specifically, as the first crosslinking agent, a crosslinking agent having one or more functional groups reactable with a water-soluble substituent of the acrylic acid-based unsaturated monomer and one or more ethylenically unsaturated groups; or a crosslinking agent having two or more functional groups reactable with a water-soluble substituent of the monomer and/or a water-soluble substituent formed by hydrolysis of the monomer may be used.

Non-limiting examples of the first crosslinking agent may include multifunctional crosslinking agents, such as N,N'-methylenebisacrylamide, trimethylpropane tri(meth)acrylate, ethylene glycol di(meth)acrylate, polyethylene glycol (meth)acrylate, polyethylene glycol di(meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, or ethylene carbonate, which may be used alone or in combination of two or more thereof, but are not limited thereto.

The first crosslinking agent may be used in an amount of 0.01 part by weight to 5 parts by weight with respect to 100 parts by weight of the water-soluble ethylenically unsaturated monomer. For example, the first crosslinking agent may be used in an amount of 0.01 part by weight or more, 0.05 parts by weight or more, 0.1 part by weight or more, 0.45 parts by weight or more, and 5 parts by weight or less, 3 parts by weight or less, 2 parts by weight or less, 1 part by weight or less, and 0.1 part by weight to 3 parts by weight, or 0.45 parts by weight to 1 part by weight with respect to 100 parts by weight of the water-soluble ethylenically unsaturated monomer. When the content of the first crosslinking agent is too low, sufficient crosslinking does not occur, and thus it may be difficult to achieve a strength beyond the appropriate level, and when the content of the first crosslinking agent is too high, the internal crosslinking density is increased, and thus it may be difficult to achieve a desired water retention capacity.

The monomer composition may further include a polymerization initiator for initiating a polymerization reaction of the monomer. As the polymerization initiator, those commonly used in the preparation of the superabsorbent polymer may be used without particular limitation.

Specifically, the polymerization initiator may be a thermal polymerization initiator or a photopolymerization initiator by UV radiation, depending on the polymerization method. However, even in the case of the photopolymerization method, a certain amount of heat may be generated by UV irradiation, etc., and a certain amount of heat is generated with the polymerization reaction which is an exothermic reaction, and therefore, a thermal polymerization initiator may be further included.

As the photopolymerization initiator, a compound capable of forming radicals by a light such as UV may be used without limitations in view of composition.

For example, one or more selected from the group consisting of benzoin ether, dialkyl acetophenone, hydroxyl alkylketone, phenyl glyoxylate, benzyl dimethyl ketal, acyl phosphine, and $\alpha$-aminoketone may be used as the photopolymerization initiator. Meanwhile, as the specific example of acyl phosphine, commercially available lucirin TPO, namely, diphenyl(2,4,6-trimethylbenzoyl)phosphine oxide may be used. More various photopolymerization initiators are well disclosed in "UV Coatings: Basics, Recent Developments and New Application (Elsevier, 2007)" written by Reinhold Schwalm, p115, however, they are not limited to the above described examples.

The photopolymerization initiator may be included in an amount of about 0.01% by weight to about 1.0% by weight with respect to the monomer composition. When the concentration of the photopolymerization initiator is too low, the polymerization rate may become slow. When the concentration of the photopolymerization initiator is too high, the molecular weight of the superabsorbent polymer may become low and its physical properties may not become uniform.

Further, one or more selected from the group consisting of persulfate-based initiators, azo-based initiators, hydrogen peroxide, and ascorbic acid may be used as the thermal polymerization initiator. Specific examples of the persulfate-based initiators may include sodium persulfate (NazSzOs), potassium persulfate (KzSzOs), ammonium persulfate ($(NH_4)_2S_2O_8$) or the like. Examples of the azo-based initiators may include 2,2-azobis(2-amidinopropane)dihydrochloride, 2,2-azobis-(N,N-dimethylene)isobutyramidine dihydrochloride, 2-(carbamoylazo)isobutyronitrile, 2,2-azobis(2-[2-imidazolin-2-yl]propane)dihydrochloride, 4,4-azobis-(4-cyanovaleric acid) or the like. More various thermal polymerization initiators are well-disclosed in 'Principle of Polymerization (Wiley, 1981)' written by Odian, p203, however, they are not limited to the above described examples.

The thermal polymerization initiator may be included in an amount of about 0.001% by weight to about 0.5% by weight with respect to the monomer composition. When the concentration of the thermal polymerization initiator is too low, additional thermal polymerization hardly occur, and thus the effect of adding the thermal polymerization initiator may be insignificant. When the concentration of the thermal polymerization initiator is too high, the molecular weight of the superabsorbent polymer may become low and its physical properties may not become uniform.

The total amount of these polymerization initiators may be 2 parts by weight or less with respect to 100 parts by weight of the water-soluble ethylenically unsaturated monomer. In other words, when the concentration of the polymerization initiators is too low, the polymerization rate may become slow and a large amount of residual monomer may be extracted in the final product, which is not preferred. On the contrary, when the concentration of the polymerization initiators is higher than the above range, polymer chains constituting the network become short, and thus the content of water-soluble components is increased and physical properties of the polymer may deteriorate, such as a reduction in absorbency under pressure, which is not preferred.

The monomer composition may further include an additive such as a thickener, a plasticizer, a preservation stabilizer, an antioxidant, etc., as needed.

Further, the monomer composition including the monomer may be, for example, in a solution state, in which it is dissolved in a solvent such as water, and the solid content, i.e., the concentration of the monomer, the first crosslinking agent, and the polymerization initiator in the monomer composition in the solution state may be appropriately adjusted in consideration of polymerization time and reaction conditions, etc. For example, the solid content in the monomer mixture may be 10% by weight to 80% by weight, preferably, 10% by weight or more, 15% by weight or more, 30% by weight or more, and 80% by weight or less, 60% by weight or less, 50% by weight or less, 15% by weight to 60% by weight, or 30% by weight to 50% by weight.

When the monomer composition has a solid content in the range as described above, it is not necessary to remove unreacted monomers after polymerization by using the gel effect phenomenon that occurs in the polymerization reaction of a high-concentration aqueous solution, and it may be advantageous in controlling the pulverization efficiency during pulverization of the polymer to be described later.

As the solvent applicable at this time, any solvent may be used without limitations in view of composition thereof, as long as it is able to dissolve the above components, and for example, one or more selected from water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, and N,N-dimethylacetamide may be used in combination.

Meanwhile, the content of each component in the above-described monomer composition refers to the total content of the components in the monomer composition of the first foaming step and in the monomer composition additionally added in the second foaming step, as described later.

(First foaming step)

Next, the method of preparing a superabsorbent polymer according to one embodiment of the present invention includes the step of performing a first foaming of a mixture which is obtained by mixing the monomer composition with a first foaming agent and a foam stabilizer.

In the first foaming step, bubbles are generated by the first foaming agent included in the mixture of the monomer composition, the first foaming agent, and the foam stabilizer, and the generated bubbles may be stably trapped in the mixture by the foam stabilizer used together. The bubbles generated in the first foaming step form a plurality of pores in the water-containing gel polymer in a crosslinking polymerization step to be described later, and form a porous structure in the superabsorbent polymer which is finally prepared through processes such as drying, pulverizing, etc., thereby increasing the specific surface area.

On the other hand, the foaming step is performed at a low temperature of about 50°C or lower as described later, and thus bubbles are generated before the polymerization step, and bubbles stably trapped in the mixture by the foam stabilizer may form pores inside the water-containing gel polymer formed in the polymerization step. As the first foaming agent, a low-temperature foaming agent foamed at 50°C or lower may be used, and therefore, the foaming process may be first performed before the polymerization step.

Specific examples of the first foaming agent may include one or more selected from the group consisting of sodium carbonate, sodium bicarbonate, potassium bicarbonate, azodicarbonamide, p,p'-oxybisbenzenesulfonyl hydrazide, dinitrosopentamethylenetetramine, p-toluenesulfonyl hydrazide, and benzenesulfonyl hydrazide, preferably, sodium carbonate, potassium bicarbonate, etc.

In the first foaming step, the first foaming agent may be used in an amount of 200 ppmw to 8,000 ppmw, preferably, 200 ppmw or more, 500 ppmw or more, 500 ppmw or more, and or 8,000 ppmw or less, 6,000 ppmw or less, 4,000 ppmw or less, 500 ppmw to 6,000 ppmw, or 800 ppmw to 40,000 ppmw with respect to the water-soluble ethylenically unsaturated monomer in the mixture. When the first foaming agent is included in the above content range, the generated microbubbles may be stably formed. When the content of the first foaming agent is very small, the foaming effect is insignificant, and when it is included in excess, the gel strength of the superabsorbent polymer finally prepared may be reduced.

The foam stabilizer is a component that allows the bubbles generated from the foaming agent to be stably captured in the mixture without coming out of the mixture, and is dispersed in the interface between the bubbles generated by the foaming agent and the mixture to capture and stabilize the bubbles. In addition, the concentration of the foam stabilizer is changed in the first foaming step and the second foaming step to be described later, and thus it is possible to control the size of the generated bubbles.

Specifically, as the concentration of the foam stabilizer in the mixture is higher, it is easier to stably form microbubbles. In the present invention, the foam stabilizer is added at a relatively high concentration in the first foaming step, and then the foaming agent, the monomer, the solvent, etc. are additionally added in the second foaming step, and as a result, the concentration of the foam stabilizer becomes low. Accordingly, microbubbles having a relatively small average diameter are generated in the first foaming step, and bubbles having a relatively large average diameter are generated in the second foaming step.

The foam stabilizer may be a hydrophilic surface modification compound, and is located at the interface between bubbles generated by the foaming agent and the mixture, thereby stably capturing the bubbles.

Specifically, the foam stabilizer is a particle-type material having an average diameter of about 0.05 $\mu$m to about 5 $\mu$m dispersible in the mixture through hydrophilic surface modification.

The foam stabilizer is a compound which is prepared by hydrophilic surface-modification of a hydrophobic compound with a specific surface modifier, specifically, by hydrophilic surface-modification of the hydrophobic compound using, as the surface modifier, one or more polymers selected from the group consisting of polyethylene glycol, polyvinyl alcohol, polyvinylpyrrolidine, polyvinyl acetate, polyvinylpyrrolidine polyacrylic acid, polyacrylamide, polydopamine, poly(4-styrenesulfonate) polyethylene glycol, and polypropylene glycol, or a copolymer thereof.

The polymer used as the surface modifier may be a homopolymer or a block copolymer.

The hydrophobic compound may include a hydrophobic synthetic polymer compound having a melting point of 100°C or higher, for example, poly(L-lactide), poly(D,L-lactic-co-glycolic acid), polylactic acid, polystyrene, polymethyl methacrylate, a polystyrene-polybutadiene copolymer, a polystyrene-polyimide copolymer, nylon, polyester; a hydrophobic natural polymer compound having a melting point of 100°C or higher, for example, lignin, a polylactic acid-lignin blend, cellulose acetate (e.g., cellulose triacetate, cellulose acetate propionate, cellulose acetate butyrate, cellulose acetate phthalate); solid hydrocarbons having a melting point of 100°C or higher, for example, fatty acids (e.g., stearic acid, palmitic acid), fatty acid metal salts, glyceride esters, and sugar esters; particles (e.g., talc, etc.) capable of hydrophilic surface modification among hydrophobic compounds used as defoamers and lubricants, but is not particularly limited thereto.

Meanwhile, the hydrophilic surface-modified foam stabilizer may be surface-modified through a method of dispersing and stirring hydrophobic particles and a surface modifier in a mixed solution of water and a co-solvent (acetone, ethanol, etc.), when the surface modification target is an insoluble hydrophobic compound. In addition, when the surface modification target is dissolved in an organic solvent, it may be surface-modified through a method of dropping the organic solvent, in which the hydrophobic compound is dissolved, into water to precipitate the compound (dropping method), or a method of forming an emulsion and then evaporating the volatile organic solvent (emulsion evaporation method).

The hydrophilic surface-modified foam stabilizer may have an average diameter of about 0.05 $\mu$m to about 5 $\mu$m when dispersed in the mixture.

The concentration of the foam stabilizer with respect to the total weight of the mixture in the first foaming step is greater than the concentration of the foam stabilizer with respect to the total weight of the mixture in the second foaming step. This is because, in the second foaming step, the second foaming agent is additionally included in the first foamed mixture, and thus the relative concentration (content) of the foam stabilizer becomes small.

Specifically, in the first foaming step, the foam stabilizer may be included in an amount of 0.02% by weight to 1.0% by weight with respect to the total weight of the mixture, and in this case, the concentration of the foam stabilizer in the second foaming step becomes smaller than that in the first foaming step. In the first foaming step, the content of the foam stabilizer is preferably 0.02% by weight or more, 0.05% by weight or more, 0.1% by weight or more, 0.3% by weight or more, and 1.0% by weight or less, 0.8% by weight or less, 0.5% by weight or less, and 0.05% by weight to 0.8% by weight, or 0.3% by weight to 0.5% by weight. When the foam stabilizer is included in the above content range, bubbles to be generated may be stably formed, and in particular, the diameter of the bubbles to be generated may be controlled to 100 nm or less. Therefore, in the first foaming step, microbubbles having a diameter of 100 nm or less may be generated.

The first foaming agent and the foam stabilizer may be used as a first foaming agent composition in which they are dissolved or dispersed.

The first foaming agent composition may further include an additional solvent to dissolve or disperse the first foaming agent and the foam stabilizer. As the solvent, for example, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate, N,N-dimethylacetamide, or a mixture thereof may be used, and preferably, water may be used.

The first foaming step may be performed at 35°C to 50°C, preferably, at 35°C or higher, 40°C or higher, 50°C or lower, and the first foaming agent is foamed in the corresponding temperature range, and microbubbles may be easily captured inside the mixture.

In the first foaming step, microbubbles having a diameter of 100 nm or less are generated. The diameter of the microbubbles is preferably 20 nm or more, and may be 100 nm or less or 20 nm to 100 nm. The microbubbles are stably captured in the mixture due to the high-concentration foam stabilizer, and contribute to the formation of micropores with a diameter of 2 $\mu$m to 180 $\mu$m in the superabsorbent polymer which is finally prepared through an additional foaming process, a crosslinking polymerization process, a surface crosslinking process, a pulverization process, etc.

(Second foaming step)

Next, the method of preparing a superabsorbent polymer according to one embodiment of the present invention includes the step of performing a second foaming of a mixture which is obtained by mixing the first foamed mixture with a second foaming agent.

Here, the first foamed mixture refers to a mixture including microbubbles by the first foaming.

After the first foaming, additional bubbles are generated through the second foaming step. The bubbles are generated by the foaming agents (residual first foaming agent and additional second foaming agent) in the mixture. The bubbles generated in the second foaming step may be stably captured in the mixture by the foam stabilizer present in the first foamed mixture.

However, in the second foaming step, no additional foam stabilizer is added, and the concentration of the foam stabilizer in the mixture becomes relatively low in the second foaming step. Accordingly, the bubbles generated in the second foaming step have a larger average diameter than the bubbles generated in the first foaming step. In addition, depending on the sizes of the bubbles generated in the first foaming step and the bubbles generated in the second foaming step, it is possible to achieve a hierarchical porous structure in the superabsorbent polymer finally prepared.

In the second foaming agent, the same component as in the first foaming agent described above may be used.

In addition, the content of the second foaming agent is used on the same basis as the first foaming agent described above, and as described later, when monomers are added in the second foaming step, the second foaming agent may be further added according to the amount of the monomers. Specifically, the second foaming agent may be used in an amount of 200 ppmw to 8,000 ppmw, preferably, 200 ppmw or more, 500 ppmw or more, 500 ppmw or more, or 8,000 ppmw or less, 6,000 ppmw or less, 4,000 ppmw or less, 500 to 6,000 ppmw or 800 ppmw to 40,000 ppmw with respect to the water-soluble ethylenically unsaturated monomer in the mixture to be foamed. When the second foaming agent is included in the above content range, bubbles may be stably generated.

The second foaming agent may be used as a second foaming agent composition including an additional solvent. Here, as the solvent, the same solvent as in the first foaming agent composition may be used.

On the other hand, in the second foaming step, the concentration of the foam stabilizer included in the mixture becomes lower than that of the first foaming step, and the concentration is decreased up to 0.1 to 0.5 times than in the first foaming step (this means that the foaming target mixture is diluted 2 to 10 times).

Specifically, the concentration of the foam stabilizer is relatively decreased according to the content of the added second foaming agent composition, and the concentration of the foam stabilizer may be decreased by additionally adding the monomer composition in the second foaming step.

In the second foaming step, the additionally added monomer composition may include a water-soluble acrylic acid-based monomer having acidic groups of which at least part is neutralized, a polymerization initiator, and a first crosslinking agent. Components and contents of the water-soluble acrylic acid-based monomer, the polymerization initiator, and the first crosslinking agent are the same as described above.

The second foaming step may be performed at 35°C to 50°C, and the foaming agent is foamed in the corresponding temperature range so that bubbles may be easily captured in the mixture.

In the second foaming step, bubbles having a particle diameter of 2 to 10 times that of the bubbles generated in the first foaming process may be generated.

Specifically, when microbubbles having a diameter of 100 nm or less are generated in the first foaming step, bubbles having a diameter of 100 nm to 1,000 nm may be generated in the second foaming step. Preferably, the diameter of the bubbles may be 100 nm or more, 150 nm or more, 1,000 nm or less, 500 nm or less, 400 nm or less, 250 nm or less, and 100 nm to 500 nm, 100 nm to 400 nm or 150 nm to 250 nm. The bubbles contributes to the formation of pores with an average diameter of 180 $\mu$m or more in the superabsorbent polymer which is finally prepared through a crosslinking polymerization process, a surface crosslinking process, a pulverization process, etc.

Meanwhile, as needed, the above-described foaming step may be additionally performed a plurality of times, and by adjusting the concentration of the bubble stabilizer in the additional foaming step, it is possible to generate bubbles having different sizes of average diameter.

(Crosslinking-polymerizing step)

Next, the method of preparing a superabsorbent polymer according to one embodiment of the present invention includes the step of forming a water-containing gel polymer by crosslinking-polymerizing the second foamed mixture.

Here, the second foamed mixture includes hierarchical bubbles generated in the first and second foaming steps. The bubbles included in the second foamed mixture are stably captured in the foamed mixture by the foam stabilizer, and the bubbles form pores inside the water-containing gel polymer which is formed in the crosslinking polymerization step. Specifically, a hierarchical porous structure having different average diameters is formed in the water-containing gel polymer.

The crosslinking polymerization step may be performed at 50°C to 100°C, which is a temperature higher than the temperature of the above-described foaming step. When the polymerization is performed within the above temperature range, an appropriate pore structure may be formed inside the water-containing gel polymer by the bubbles generated in the foaming steps.

The crosslinking polymerization method is largely classified into a thermal polymerization and a photopolymerization according to a polymerization energy source. When the thermal polymerization is performed, it may be commonly performed in a reactor like a kneader equipped with agitating spindles. When the photopolymerization is performed, it may be performed in a reactor equipped with a movable conveyor belt. The above-described polymerization method is an example only, and the present invention is not limited to the above-described polymerization methods.

For example, the water-containing gel polymer which is obtained by performing thermal polymerization while providing hot air to the above-described reactor like a kneader equipped with the agitating spindles or by heating the reactor may have a size of centimeters or millimeters when it is discharged from an outlet of the reactor, according to the type of agitating spindles equipped in the reactor. Specifically, the size of the obtained water-containing gel polymer may vary depending on a concentration of the monomer composition fed thereto, a feeding speed or the like, and the water-containing gel polymer having a weight average diameter of 2 mm to 50 mm may be generally obtained.

Further, as described above, when the photopolymerization is performed in a reactor equipped with a movable conveyor belt, the obtained water-containing gel polymer may be usually a sheet-like water-containing gel polymer having a width of the belt. In this case, the thickness of the polymer sheet may vary depending on the concentration of the monomer composition fed thereto and the feeding speed. Usually, it is preferable to supply the monomer composition such that a sheet-like polymer having a thickness of about 0.5 cm to about 5 cm may be obtained. When the monomer composition is supplied to such an extent that the thickness of the sheet-like polymer becomes too thin, it is undesirable because the production efficiency is low, and when the thickness of the sheet-like polymer is more than 5 cm, the polymerization reaction may not evenly occur throughout the entire thickness because of the excessive thickness.

The water-containing gel polymer obtained by the above-mentioned method may have a water content of about 40% by weight to about 80% by weight. Meanwhile, the "water content" as used herein means a weight occupied by water with respect to the total weight of the polymer, which may be a value obtained by subtracting the weight of the dry polymer from the weight of the polymer. Specifically, the water content may be defined as a value calculated by measuring the weight loss due to evaporation of moisture in the polymer during the process of drying by raising the temperature of the polymer through infrared heating. At this time, the water content is measured under the following drying conditions: the temperature is increased from room temperature to about 180°C and then the temperature is maintained at 180°C, and the total drying time is set to 20 minutes, including 5 minutes for the temperature rising step.

(Drying, Pulverizing, and Classifying step)

Next, according to one embodiment of the present invention, the step of forming a base polymer powder by drying, pulverizing, and classifying the water-containing gel polymer is included.

Specifically, the step of drying the obtained water-containing gel polymer is performed. As needed, the step of coarsely pulverizing the water-containing gel polymer may be further performed before drying, in order to increase the efficiency of the drying step.

In this regard, a pulverizer used here is not limited by its configuration, and specifically, it may include any one selected from the group consisting of a vertical pulverizer, a turbo cutter, a turbo grinder, a rotary cutter mill, a cutter mill, a disc mill, a shred crusher, a crusher, a chopper, and a disc cutter, but is not limited to the above-described examples.

In this regard, the coarse pulverizing step may be carried out such that the particle diameter of the water-containing gel polymer becomes 2 mm to 10 mm. Pulverizing into a particle diameter of less than 2 mm is not technically easy due to the high water content of the water-containing gel polymer, and an agglomeration phenomenon between the pulverized particles may occur. Meanwhile, when the polymer is pulverized into a particle diameter of greater than 10 mm, the effect of increasing the efficiency in the subsequent drying step may be insignificant.

The water-containing gel polymer coarsely pulverized as above or the water-containing gel polymer immediately after polymerization without the coarsely pulverizing step is subjected to drying. In this regard, the drying step may be performed at a temperature of 150°C or higher for 30 minutes or longer, preferably, at a temperature of 150°C to 250°C or 170°C to 200°C. When the drying temperature is lower than 150°C, it is apprehended that the drying time becomes too long and the physical properties of the superabsorbent polymer finally formed may be deteriorated. When the drying temperature is higher than 250°C, it is apprehended that only the polymer surface is excessively dried, and thus fine particles may be generated during the subsequent pulverization process and the physical properties of the superabsorbent polymer finally formed may be deteriorated.

Meanwhile, the drying step may be carried out for 30 minutes or longer. When the drying step is carried out for 30 minutes or shorter, sufficient drying does not occur. Preferably, the drying step may be carried out for 30 minutes to 90 minutes, but is not limited thereto.

In the drying step, any drying method may be selected and used without limitation in view of constitution, as long as it is commonly used in the process of drying the water-containing gel polymer. Specifically, the drying step may be carried out by a method such as hot air supply, infrared irradiation, microwave irradiation or ultraviolet irradiation, etc. When the drying step as above is finished, the water content of the polymer may be about 0.1% by weight to about 10% by weight.

Next, the step of pulverizing the dried polymer obtained through the drying step is performed.

The polymer powder obtained through the pulverizing step may have a particle diameter of about 300 $\mu$m to about 800 $\mu$m. Specific examples of a pulverizer that may be used to achieve the above particle diameter may include a pin mill, a hammer mill, a screw mill, a roll mill, a disc mill, or a jog mill, etc., but are not limited to the above-described examples.

In order to manage the physical properties of the superabsorbent polymer powder that is finally commercialized after the pulverization step, a separate process of classifying the polymer powders obtained after the pulverization according to the particle size may be carried out. Preferably, a polymer having a particle diameter of 300 $\mu$m to 800 $\mu$m is classified, and only the polymer powder having such a particle diameter is subjected to a surface crosslinking reaction, followed by commercialization. More specifically, the classified base polymer powder has a particle diameter of 300 $\mu$m to 800 $\mu$m, and may include 50% by weight or more of the particles having a particle diameter of 300 $\mu$m to 600 $\mu$m.

(Surface-crosslinking process)

Meanwhile, according to one embodiment of the present invention, after preparing the base polymer powder through the above-described classifying process, the step of crosslinking at least part of the surface of the base polymer powder in the presence of a surface crosslinking agent is included.

At least part of the surface of the base polymer powder is thermally crosslinked by heat treatment of the base polymer powder in the presence of the second crosslinking agent, thereby forming superabsorbent polymer particles. The surface crosslinking step is to induce a crosslinking reaction on the surface of the base polymer powder in the presence of the second crosslinking agent. Through this surface crosslinking, a surface-crosslinked layer may be formed on at least part of the surface of the base polymer powder. This is to increase the surface crosslinking density of the superabsorbent polymer. As described above, when the superabsorbent polymer further includes a surface crosslinked layer, it has a structure having a higher crosslinking density on the outside than on the inside.

The surface crosslinking step may be performed at a temperature of about 180°C or higher for about 30 minutes or longer.

As the second crosslinking agent, any second crosslinking agent that has been traditionally used in the preparation of superabsorbent polymers may be used without any particular limitation. For example, the second crosslinking agent may include one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol, and glycerol; one or more carbonate-based compounds selected from the group consisting of ethylene carbonate and propylene carbonate; epoxy compounds such as ethylene glycol diglycidyl ether, etc.; oxazoline compounds such as oxazolidinone, etc.; polyamine compounds; oxazoline compounds; mono-, di-, or polyoxazolidinone compounds; or cyclic urea compounds, etc. Preferably, those the same as the above-described first crosslinking agent may be used, and for example, a diglycidyl ether-based compound of alkylene glycol, such as ethyleneglycol diglycidyl ether, etc., may be used.

The second crosslinking agent may be used in an amount of 0.001 part by weight to 2 parts by weight with respect to 100 parts by weight of the base polymer powder. Preferably, the second crosslinking agent may be used in an amount of 0.005 parts by weight or more, 0.01 part by weight or more, or 0.02 parts by weight or more, and 0.5 parts by weight or less, 0.3 parts by weight or less. By controlling the content range of the second crosslinking agent within the above-described range, it is possible to prepare a superabsorbent polymer exhibiting overall physical properties, such as excellent absorption performances, liquid permeability, etc.

Meanwhile, in order to further improve liquid permeability of the superabsorbent polymer according to one embodiment, aluminum salts such as aluminum sulfate salt and other various polyvalent metal salts may be further used during surface crosslinking. Such a polyvalent metal salt may be included on the surface-crosslinked layer of the superabsorbent polymer finally prepared.

Meanwhile, the superabsorbent polymer according to one embodiment of the present invention may have a particle diameter of 300 $\mu$m to 800 $\mu$m. More specifically, at least 95% by weight or more of the base polymer powder and the superabsorbent polymer including the same have a particle diameter of 300 $\mu$m to 800 $\mu$m, and 50% by weight or more of particles having a particle diameter of 300 $\mu$m to 600 $\mu$m may be included.

(Superabsorbent polymer)

The superabsorbent polymer prepared according to the method of preparing a superabsorbent polymer according to one embodiment of the present invention includes a plurality of pores, of which average diameter may be 20 $\mu$m to 150 $\mu$m, though the above described multi-step foaming process of the present invention.

In addition, the superabsorbent polymer includes 70% or more of micropores having a diameter of 2 $\mu$m to 180 $\mu$m among the pores. Thus, the superabsorbent polymer may include a hierarchical pore structure. A proportion of the micropores is preferably 70% or more, 73% or more, 78% or more, 81% or more, 84% or more, and 99% or less, 95% or less, 92% or less, or 70 to 99%, 73 to 92%.

Even when a common foaming process is performed, the generated microbubbles easily disappear through processes such as polymerizing, pulverizing, etc. As described above, in the present invention, the multi-step foaming process using the foam stabilizer is performed, and as a result, many micropores with a diameter of 2 $\mu$m to 180 $\mu$m exist in the superabsorbent polymer finally prepared, and thus the absorption rate may be remarkably improved.

Meanwhile, during preparation of the superabsorbent polymer, when the multi-step foaming process is not performed or when the foam stabilizer of the present invention is not used even though the multi-step process is performed, it is difficult to introduce the desired hierarchical pore structure of the present invention.

At this time, the average diameter of the pores in the superabsorbent polymer may be examined by observing the internal structure of the superabsorbent polymer particles to be measured using an optical microscope (OM; magnification: X50 or X500) and an electron microscope (SEM; magnification: X200 or X5000). More specifically, the longest diameter of each pore included in the superabsorbent polymer particle is measured, and then the median of the measured longest diameters may be determined as the average diameter. At this time, it is preferable to determine the average diameter after measuring the diameters of 800 or more pores with respect to one superabsorbent polymer sample.

In addition, the content of micropores having a diameter of 2 $\mu$m to 180 $\mu$m means that the longest diameter of each of 800 or more pores is measured with respect to one superabsorbent polymer sample, and then, in the pores, a proportion of the number of micropores having a diameter of 2 $\mu$m to 180 $\mu$m is determined.

On the other hand, the superabsorbent polymer may include particles having a particle diameter of about 300 $\mu$m to about 800 $\mu$m in an amount of 90% by weight or more, based on the total weight, and the particle diameter of the superabsorbent polymer particle may be determined according to the European Disposables and Nonwovens Association (EDANA) WSP 220.3 method.

In addition, the superabsorbent polymer may have a centrifuge retention capacity (CRC) of 28 g/g or more, and preferably, 28.8 g/g or more, 29.5 g/g or more, and 35 g/g or less, 33 g/g or less, 31.7 or less, 28 to 35 g/g, or 28.8 to 31.7 g/g, as measured according to the EDANA WSP 241.3 method. The method of measuring the centrifuge retention capacity (CRC) will be described in more detail in Experimental Example to be described later.

Further, the superabsorbent polymer has an absorption rate (vortex time) of 40 seconds or less according to the vortex method. The absorption rate is more excellent as the value is smaller, and therefore, the lower limit of the absorption rate is 0 second in theory. For example, the absorption rate may be 5 seconds or more, 10 seconds or more, 20 seconds or more, and 40 seconds or less, 38 seconds or less, 37 seconds or less, 35 seconds or less, 33 seconds or less, 32 seconds or less, 31 seconds or less, or 10 seconds to 40 seconds. The absorption rate according to the vortex method means a time (unit: sec) taken for a vortex of liquid to disappear by rapid absorption when the superabsorbent polymer added in physiological saline is stirred. As the time is shorter, the superabsorbent polymer may be considered to have a higher initial absorption rate. Here, the physiological saline means a 0.9wt% aqueous sodium chloride (NaCl) solution. The method of measuring the absorption rate will be described in more detail in Experimental Example to be described later. On the other hand, the absorption rate according to the vortex method may be measured in the same manner for the base polymer powder before surface crosslinking.

The present invention will be described in more detail in the following exemplary embodiments. However, the following exemplary embodiments are only for illustrating the present invention, and the detailed description of the present invention is not limited by the following exemplary embodiments.

## <Preparation Example>

Hereinafter, a first foaming agent composition including a foam stabilizer used in Example was prepared as follows.

### Preparation Example 1-1: Preparation of first foaming agent composition (A-1)

First, 500 g of water containing a PEO copolymer (Pluronic® F-127, Sigma-Aldrich) at a concentration of 0.25% w/v was put in a high shear mixer, and 20% v/v of dichloromethane containing 15% w/v of polylactic acid (Poly(L-lactide), average Mn of 20,000, Sigma-Aldrich) was added thereto under stirring at room temperature ($24\pm1°C$) and atmospheric pressure (1 atm) at 20,000 rpm. After adding dichloromethane, stirring was further performed at 20,000 rpm for 15 minutes to form an oil in water emulsion.

Thereafter, dichloromethane was evaporated under slowly stirring for 20 hours to form a PLA foam stabilizer surface-modified with the PEO copolymer. The foam stabilizer was recovered by centrifugation, and then redispersed in water. At this time, the average diameter of the foam stabilizer in the aqueous dispersion was 0.3 $\mu$m.

9 g of the prepared foam stabilizer was added to 800 g of water (here, the total water content was 800 g in consideration of the water content in the aqueous dispersion including the foam stabilizer). Next, 1.35 g of sodium bicarbonate (SBC) was also added as the first foaming agent, and stirred at room temperature ($24\pm1°C$) to prepare a first foaming agent composition.

### Preparation Example 1-2: Preparation of first foaming agent composition (A-2)

In Preparation Example 1-1, PLA/lignin (introduced into an organic solvent at a weight ratio of 9:1) was used in the same amount, instead of PLA, when preparing the aqueous dispersion of the foam stabilizer. At this time, the average diameter of the foam stabilizer in the aqueous dispersion was 0.3 $\mu$m.

In addition, a first foaming agent composition (A-2) was prepared in the same manner as in Preparation Example 1-1.

### Preparation Example 1-3: Preparation of first foaming agent composition (A-3)

In Preparation Example 1-1, PEIPP wax(LG chem) was used in the same amount, instead of PLA. At this time, the average diameter of the foam stabilizer in the aqueous dispersion was 0.2 $\mu$m.

In addition, a first foaming agent composition (A-3) was prepared in the same manner as in Preparation Example 1-1.

### Preparation Example 1-4: Preparation of first foaming agent composition (A-4)

In Preparation Example 1-1, cellulose ester (180955, Sigma-Aldrich) was used in the same amount, instead of PLA. At this time, the average diameter of the foam stabilizer in the aqueous dispersion was 0.6 $\mu$m.

In addition, a first foaming agent composition (A-4) was prepared in the same manner as in Preparation Example 1-1.

### Preparation Example 1-5: Preparation of first foaming agent composition (A-5)

In Preparation Example 1-1, Mg stearate (415057, Sigma-Aldrich) was used in the same amount, instead of PLA. At this time, the average diameter of the foam stabilizer in the aqueous dispersion was 2 $\mu$m.

In addition, a first foaming agent composition (A-5) was prepared in the same manner as in Preparation Example 1-1.

**Preparation Example 1-6: Preparation of first foaming agent composition (A-6)**

In Preparation Example 1-1, polyvinyl alcohol (360627, Mw 9,000-10,000, Sigma-Aldrich) was used in the same amount, instead of the surface modifier PEO copolymer. At this time, the average diameter of the foam stabilizer in the aqueous dispersion was 0.3 μm.
In addition, a first foaming agent composition (A-6) was prepared in the same manner as in Preparation Example 1-1.

**Preparation Example 1-7: Preparation of first foaming agent composition (A-7)**

A first foaming agent composition (A-7) was prepared in the same manner as in Preparation Example 1-1, except that potassium bicarbonate (DUKSAN) was used in the same amount, instead of the foaming agent SBC, in Preparation Example 1-1.

**<Examples and Comparative Examples>**

**Example 1**

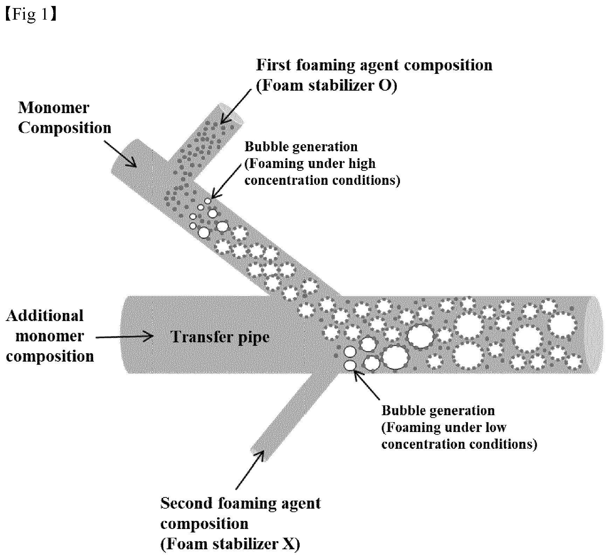

(Step 1) To a glass container equipped with a stirrer and a thermometer, 5,000 g of acrylic acid, 1,750 g of NaOH, and 2,300 g of water were slowly added dropwise to prepare a mixture. A solution, in which 615 g of water, 4.5 g of IRGACURE 819 as a photoinitiator, 9 g of sodium persulfate as a thermal initiator, and 22.5 g of polyethylene glycol diacrylate (PEGDA, molecular weight of 400 g/mol) as a first crosslinking agent were dissolved, was slowly added dropwise thereto to prepare a monomer composition. The degree of neutralization of acrylic acid in the obtained composition was 70 mol%.
(Step 2) The prepared monomer composition was introduced into a transfer pipe, and the first foaming agent composition of Preparation Example 1 was also introduced. Here, the content of SBC which is the first foaming agent was introduced to 1,500 ppmw based on acrylic acid (the content of the foam stabilizer of Preparation Example 1 was increased by 5.5 times). At this time, the foam stabilizer was included in an amount of 0.36 wt% with respect to the total weight of the mixture.
The mixture was heated to 50°C to perform first foaming. The flow rate was controlled such that the Reynolds Number was 5,000 or more in order to easily mix the monomer composition and the first foaming agent composition inside the transfer pipe.
(Step 3) The prepared monomer composition was additionally added to the first foamed mixture, and the second foaming agent composition in which SBC was dispersed in water was sequentially added such that SBC was 1,500 ppmw with respect to the total monomers in the mixture, and the second foamed mixture was heated to 50°C to perform second foaming.
At this time, the content of the additional monomer composition was controlled such that the concentration of the foam stabilizer was 0.036 wt% with respect to the total amount of the mixture (controlled such that the foam stabilizer was diluted 10 times). However, after the first foaming process, part of the foam stabilizer was adsorbed and consumed at the interface, and as a result, the concentration of the foam stabilizer in the mixture was slightly reduced.
The flow rate was controlled such that the Reynolds Number was 5,000 or more in order to easily mix the respective components inside the transfer pipe.
Meanwhile, FIG. 1 shows a schematic illustration of a flow chart of the multi-step foaming process of Example 1.
(Step 4) The second foamed mixture which came out from the transfer pipe was fed on a conveyor belt at a rate of 500 mL/min to 2000 mL/min, the belt of 10 cm in width and 2 m in length rotating at a speed of 50 cm/min. Then, at the same time as the feeding of the second foamed mixture, the polymerization reaction was allowed for 60 seconds by irradiating ultraviolet rays with an intensity of 10 mW/cm², thereby obtaining a sheet-type water-containing gel polymer having a water content of 55% by weight.
(Step 5) Next, the sheet-shaped water-containing gel polymer was cut into a size of about 5 cm × 5 cm, and then introduced into a meat chopper to pulverize the polymer, and thus the water-containing gel particle crumb having a size of 1 mm to 10 mm was obtained. Thereafter, the crumb was dried in an oven capable of shifting airflow up and down. The crumb was uniformly dried by flowing hot air at 180°C or higher from the bottom to the top for 15 minutes and from the top to the bottom for 15 minutes, and as a result, the dry product after drying had a water content of 2% or less. After drying, the crumb was pulverized using a pulverizer and then classified to prepare a base polymer powder having a size of 300 μm to 800 μm.
(Step 6) To 100 parts by weight of the prepared base polymer powder, 6 parts by weight of a second crosslinking agent aqueous solution including 3 parts by weight of ethylene carbonate was sprayed, and the surface crosslinking solution was evenly distributed on the base polymer powder by stirring at room temperature. Subsequently, the base polymer powder mixed with the surface crosslinking solution was placed in a surface crosslinking reactor to perform a surface crosslinking reaction.

It was confirmed that the base polymer powder was gradually heated from the initial temperature around 80°C in the surface crosslinking reactor, and it was manipulated to reach the maximum reaction temperature of 190°C after 30 minutes. After reaching the maximum reaction temperature, the reaction was further allowed for 15 minutes to take a sample of the superabsorbent polymer finally prepared. After the surface crosslinking process, the sample was classified with a standard mesh sieve of ASTM standard to prepare a superabsorbent polymer of Example 1 having a particle size of 300 μm to 800 μm.

**Examples 2 to 7**

Each superabsorbent polymer was prepared in the same manner as in Example 1, except that each of the first foaming agent compositions (A-2 to A-7) prepared in Preparation Examples 2 to 7 was used in Example 1.

**Comparative Example 1**

A superabsorbent polymer was prepared in the same manner as in Example 1, except that the same foam stabilizer and foaming agent as in Example 1 were used, but the first high-concentration (foam stabilizer: 0.36wt%) foaming process was not performed and the second low-concentration (foam stabilizer: 0.036wt%) foaming process was performed under the same conditions.

**Comparative Example 2**

A superabsorbent polymer was prepared in the same manner as in Example 4, except that the same foam stabilizer and foaming agent as in Example 4 were used, but the first high-concentration (foam stabilizer: 0.36wt%) foaming process was not performed and the second low-concentration (foam stabilizer: 0.036wt%) foaming process was performed under the same conditions.

**Comparative Example 3**

A superabsorbent polymer was prepared in the same manner as in Example 1, except that, in Example 1, when the first foaming agent composition of Preparation Example 1 was prepared, polystyrene (LG chem, latex beads of 0.3 μm) as the foam stabilizer was used in the same amount, but the first high-concentration (foam stabilizer: 0.36wt%) foaming process was not performed and the second low-concentration (foam stabilizer: 0.036wt%) foaming process was performed under the same conditions.

**Comparative Example 4**

A superabsorbent polymer was prepared in the same manner as in Example 1, except that the foam stabilizer was not used in Example 1.

**Comparative Example 5**

A solution (solution A) was prepared, in which 8.6 g (80 ppmw with respect to the monomer) of IRGACURE 819 initiator diluted with acrylic acid at 0.5% by weight and 12.3 g of polyethylene glycol diacrylate (PEGDA, Mw=400) diluted with acrylic acid at 20% by weight were mixed. 540 g of acrylic acid and the above solution A were introduced into a 2L-capacity glass reactor surrounded by a jacket in which a heating medium pre-cooled to 25°C was circulated. Then, to the glass reactor, 832 g of a 25wt% caustic soda solution (solution C) was slowly added dropwise and mixed. After confirming that the temperature of the mixed solution increased to about 72°C or higher by the heat of neutralization, the mixed solution was left until it was cooled. The degree of neutralization of acrylic acid in the mixed solution thus obtained was about 70 mol%. Separately, a solution D was prepared, in which bubbles were generated by introducing water into a microbubbler (O2Bubble, OB-7505) circulating at a flow rate of 500 kg/h. Silica was added thereto and placed in a sonicator (O2Bubble, OB-7505) to prepare a solution F. Then, when the temperature of the neutralized mixed solution was cooled to about 45°C, the F solution prepared in advance was injected into the mixed solution, followed by mixing. At this time, the silica was prepared at 0.05 parts by weight with respect to 100 parts by weight of the mixed solution.

Subsequently, the solution prepared above was poured into a Vat-type tray (width of 15 cm × length of 15 cm) installed in a square polymerization reactor, on which a light irradiation device was mounted, and of which inside was preheated to 80°C. Then, light irradiation was conducted on the mixed solution. It was confirmed that gel was formed from the surface about 20 seconds after light irradiation, and that a polymerization reaction occurred simultaneously with foaming at about 30 seconds after light irradiation. Subsequently, the polymerization reaction was additionally performed for 2 minutes, and the polymerzed sheet was taken and cut into a size of 3 cm × 3 cm. Then, the cut sheet was subjected to a chopping process using a meat chopper to prepare crumb. The mean particle size of the prepared crumb was 1.5 mm. Subsequently, the crumb was dried in an oven capable of shifting airflow up and down. The crumb was uniformly dried by flowing hot air at 180°C or higher from the bottom to the top for 15 minutes and from the top to the bottom for 15 minutes, so that the water content of the dry crumb was about 2% by weight or less. The dry crumb was pulverized using a pulverizer and then classified to obtain a base polymer having a size of 150 $\mu$m to 850 $\mu$m.

Thereafter, 100 parts by weight of the prepared base polymer was mixed with a crosslinking agnet solution, in which 4.5 g of water, 1 g of ethylene carbonate, 0.05 g of Aerosil 200 (Evonik), 0.25 g of a 20wt% water-dispersed silica (Snowtex, ST-O) solution were mixed, and then subjected to a surface crosslinking reaction at 190°C for 30 minutes. The resulting product was pulverized and sieved to obtain a surface-crosslinked superabsorbent polymer having a particle diameter of 150 $\mu$m to 850 $\mu$m. 0.1 g of Aerosil 200 was mixed with the obtained superabsorbent polymer in a dry manner to preapre a superabsorbent polymer.

## <Experimental Example>

### Experimental Example 1: Measurement of bubble size in multi-step foaming process

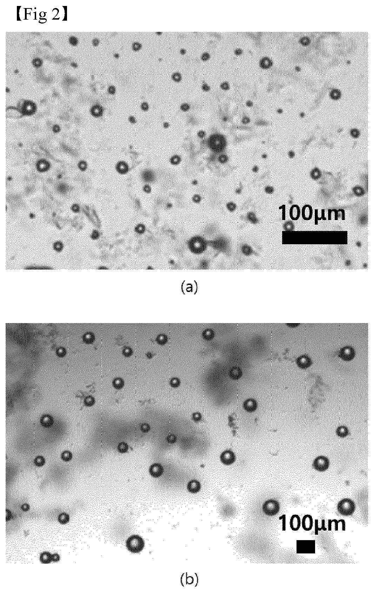

(1-1) In order to examine the structure of bubbles generated in the multi-step foaming process during the preparation process of Example 1, the foamed mixture of each foaming step was photographed using an optical microscope (product name: Ti-U, manufacturer: Nikon) at 50 to 500 magnification. In detail, OM images of the bubbles in the first foamed mixture and the second foamed mixture are shown in FIG. 2 in the following manner.

FIG. 2A shows bubbles generated after the first foaming process (foaming under high-concentration foam stabilizer conditions), and FIG. 2B shows bubbles generated after the second foaming process (foaming under low-concentration foam stabilizer conditions). Referring to FIG. 2A, a relatively high-concentration foam stabilizer was included in the first foaming process, and thus microbubbles with a small particle diameter were captured in the foamed mixture, and referring to FIG. 2B, a relatively low-concentration foam stabilizer was included in the second foaming process, as compared to the first foaming process, and thus bubbles with a relatively large particle diameter were captured in the foamed mixture.

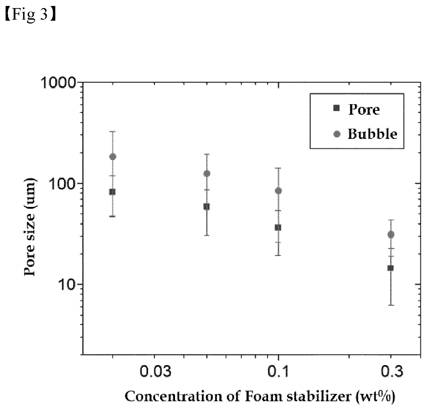

(1-2) During the preparation process of Example 1, the concentration of the foam stabilizer in the multi-step foaming process was varied, and the sizes of the bubbles generated in the foaming process were measured through the OM images of (1-1) of Experimental Example 1, and the sizes of the pores after curing were measured through the SEM images of Experimental Example 2 to be described later, and changes thereof are shown in the graph of FIG. 3.

Referring to FIG. 3, it was confirmed that as the concentration of the foam stabilizer during the foaming process was higher, the size of the generated bubbles was remarkably smaller.

### Experimental Example 2: Measurement of pore size of superabsorbent polymer

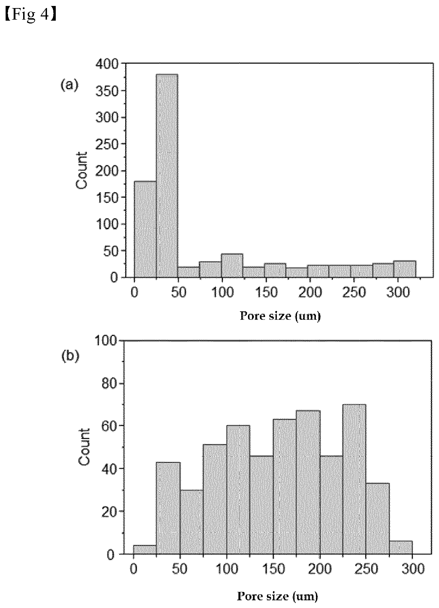

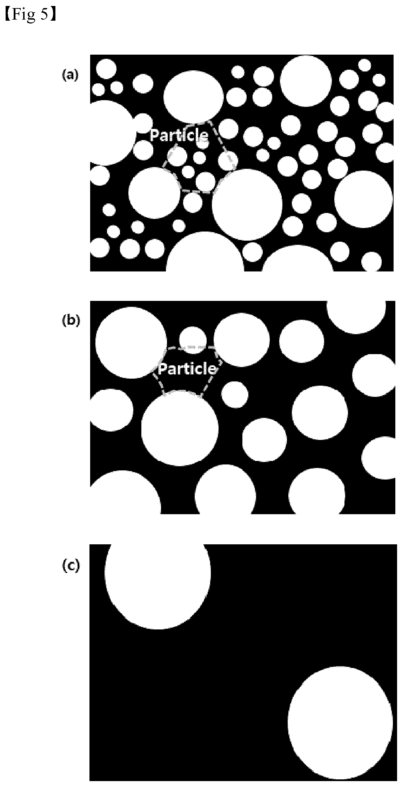

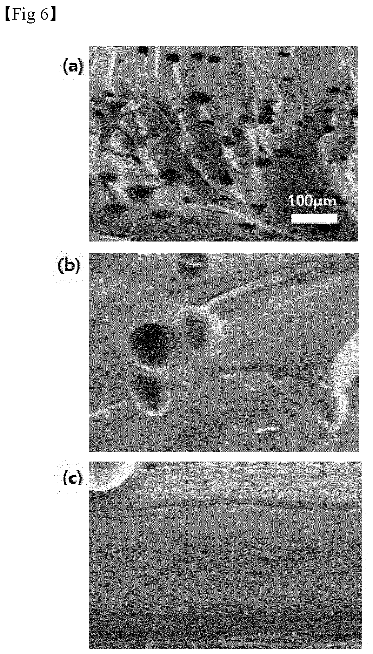

In order to examine the pore structures of the superabsorbent polymers prepared in Examples and Comparative Examples, the internal images of the superabsorbent polymer particles were photographed using a scanning electron microscope (SEM, product name: JCM-6000, manufacturer: JEOL) at 200 to 5,000 magnification. In detail, the average diameter of the pores of the superabsorbent polymer was measured as follows. Accordingly, the size distributions of the pores of Example 1 and Comparative Example 1 are shown in FIG. 4. In addition, cross-sectional images for Example 1, Comparative Example 1, and Comparative Example 4 are shown in FIGS. 5 and 6, respectively.

1) First, 2 g of sample was prepared by preparing individual particles having a particle diameter of 200 $\mu$m to 500 $\mu$m without damaging the particles by classifying the superabsorbent polymer of Example using a Retsch's particle classifier for 1 minute at 1.0 amplitude.

2) Then, the prepared sample particles were arbitrarily arranged and put in the SEM stage.

3) Next, the sample particles which were arbitrarily arranged in the SEM stage were fixed with a carbon tape, and the size of pores formed on the surface of the superabsorbent particles was measured at 200 to 5,000 magnification. At this time, 1,000 or more superabsorbent polymer particles on average were targeted, and among them, pore sizes of 800 or more particles, in which pores were clearly visible, were measured. Here, it was assumed that 'clearly visible pores' are identified by formation of spherical bubbles. When the approximately hemispherical shape appeared on the surface of the superabsorbent polymer particles through the pulverization process, it was determined as being the most clearly visible.

4) Next, the pore sizes of 800 or more particles finally measured were obtained and each diameter was measured, and a proportion of micropores having a pore diameter of 2 $\mu$m to 180 $\mu$m in the pores was calculated and shown in Table 1.

5) In addition, the average diameter was obtained from a statistically median value of the measured particle diameters, and the results are shown in Table 1. In this regard, the interquartile range was used to examine the pore size distribution, which is to exclude measurement errors due to the measurer and outlier.

FIG. 5A shows a schematic illustration of a cross-sectional image of the superabsorbent polymer prepared by the multi-step foaming process of Example 1, in which a number of micropores were present inside the superabsorbent polymer particles finally prepared through polymerizing, drying, pulverizing, etc., and thus the absorption rate may be significantly improved. FIG. 5B shows a schematic illustration of a cross-sectional image of the superabsorbent polymer prepared by the single-step foaming process of Comparative Example 1, in which pores having a relatively large average diameter were present inside the superabsorbent polymer particles finally prepared through polymerizing, drying, pulverizing, etc., and thus the effect of improving the absorption rate may be reduced, as compared to that of Example. FIG. 5C shows a schematic illustration of a cross-sectional image of the superabsorbent polymer prepared by the single-step foaming process of Comparative Example 4, in which pores having the largest average diameter were present inside the superabsorbent polymer particles finally prepared through polymerizing, drying, pulverizing, etc., and the number of pores was the smallest, and thus the effect of improving the absorption rate may be reduced, as compared to that of Example.

FIG. 6A shows a cross-sectional SEM image of the superabsorbent polymer prepared by the multi-step foaming process of Example 1, and FIG. 6B shows a cross-sectional SEM image of the superabsorbent polymer prepared by the single-step foaming process of Comparative Example 1, and FIG. 6C shows a cross-sectional SEM image of the superabsorbent polymer prepared by the single-step foaming process of Comparative Example 4. Referring to FIG. 6, Example showed that a large number of micropores was formed in the superabsorbent polymer, and thus the absorption rate may be remarkably improved.

**Experimental Example 3: Measurement of physical properties of superabsorbent polymer**

Physical properties of the superabsorbent polymers prepared in Examples and Comparative Examples were evaluated by the following methods, respectively and shown in Table 1 below.

Unless otherwise indicated, the following physical properties were all evaluated at room temperature (24 $\pm$ 1°C), and physiological saline or brine means a 0.9 wt% aqueous sodium chloride (NaCl) solution.

(1) Centrifuge Retention Capacity (CRC)

The centrifuge retention capacity by absorption capacity under no load was measured for each polymer in accordance with EDANA WSP 241.3.

In detail, after uniformly introducing $W_0$(g) (about 0.2 g) of the superabsorbent polymer in a nonwoven fabric-made bag and sealing the same, it was immersed in physiological saline (0.9 wt%) at room temperature. After 30 minutes, the bag was dehydrated by using a centrifuge at 250 G for 3 minutes, and then the weight $W_2$(g) of the bag was measured. Further, after carrying out the same operation without using the polymer, the weight $W_1$(g) of the bag was measured. CRC (g/g) was calculated using each obtained weight according to the following Equation:

[Equation 1]

$$CRC \ (g/g) = \{[W_2(g) - W_1(g)]/W_0(g)\} - 1$$

(2) Absorption rate (Vortex time)

Absorption rates (vortex time) of the superabsorbent polymers of Examples and Comparative Examples were measured by the following method.

① First, 50 mL of 0.9% brine was put in a 100 mL flat bottom beaker using a 100 mL mass cylinder.

② Next, the beaker was placed in the center of the magnetic stirrer, and then a circular magnetic bar (30 mm in diameter) was placed in the beaker.

③ Then, the stirrer was operated so that the magnetic bar stirred at 600 rpm, and the lowest part of the vortex generated by the stirring was allowed to touch the top of the magnetic bar.

④ After confirming that the temperature of the brine in the beaker reached 24.0°C, 2±0.01 g of the superabsorbent polymer sample was introduced, and at the same time, a stop watch was operated. The time taken for the vortex to disappear and for the liquid surface to be completely level was measured in second, and determined as the absorption rate.

【Table 1】

| Section | Foaming agent | Foam stabilizer | | Foaming process | Average diameter (μm) of pores | Proportion of micropores[*] (%) | CRC (%) | Vortex (sec) |
|---------|---------------|-----------------|--|-----------------|-------------------------------|-------------------------------|---------|--------------|
|         |               | Hydrophobic particle | Surface modifier |  |  |  |  |  |

| | | | | | | | | |
|---|---|---|---|---|---|---|---|---|
| Example 1 | SBC | PLA | PEO copolymer | Step 1 (high concentration) Step 2 (low concentration) | 92 | 92 | 30.6 | 31 |
| Example 2 | SBC | PLA/lignin | PEO copolymer | Step 1 (high concentration) Step 2 (low concentration) | 98 | 87 | 31.7 | 32 |
| Example 3 | SBC | PE/PP wax | PEO copolymer | Step 1 (high concentration) Step 2 (low concentration) | 115 | 78 | 29.5 | 38 |
| Example 4 | SBC | cellulose ester | PEO copolymer | Step 1 (high concentration) Step 2 (low concentration) | 102 | 85 | 28.8 | 33 |
| Example 5 | SBC | Mg-stearate | PEO copolymer | Step 1 (high concentration) Step 2 (low concentration) | 121 | 73 | 30.1 | 40 |
| Example 6 | SBC | PLA | PVA polymer | Step 1 (high concentration) Step 2 (low concentration) | 109 | 81 | 31.2 | 37 |
| Example 7 | PBC | PLA | PEO copolymer | Step 1 (high concentration) | 86 | 84 | 29.8 | 37 |

| | | | | Step 2 (low concentration) | | | | |
|---|---|---|---|---|---|---|---|---|
| Comparative Example 1 | SBC | PLA | PEO copolymer | Step 2 (low concentration) | 158 | 65 | 29.3 | 43 |
| Comparative Example 2 | SBC | cellulose ester | PEO copolymer | Step 2 (low concentration) | 162 | 64 | 29.9 | 44 |
| Comparative Example 3 | SBC | Polystyrene | PEO copolymer | Step 2 (low concentration) | 215 | 50 | 28.9 | 49 |
| Comparative Example 4 | SBC | - | - | Step 1 Step 2 | 227 | 42 | 31.5 | 49 |
| Comparative Example 5 | SBC | Silica | - | Step 1 (microbubble generator) Step 2 (sonicator) | 187 | 58 | 30.8 | 47 |

*micropores: pores of 2 μm to 180 μm in diameter

Referring to Table 1, Examples showed that the hierarchical pore distribution was formed in the prepared superabsorbent polymer by performing the multi-step foaming process using the foam stabilizer, and thus the improved absorption property and absorption rate were 5 exhibited.

Comparative Examples 1 to 3, in which no multi-step foaming process was performed although the foam stabilizer was used, showed that it was difficult to form the hierarchical pore distribution, and thus the Vortex was increased, as compared to those of Examples.

Comparative Example 4, in which no foam stabilizer was used although the multi-step foaming process was performed, showed that it was difficult to generate microbubbles, and thus the Vortex was remarkably increased, as compared to those of Examples.

Further, Comparative Example 5, in which the physical foaming process was performed although the multi-step foaming process was performed, showed that it was difficult to generate microbubbles, and thus the Vortex was remarkably increased, as compared to those of Examples.

## Claims

1. A method of preparing a superabsorbent polymer, the method comprising the steps of:

   preparing a monomer composition including a water-soluble acrylic acid-based monomer having acidic groups of which at least part is neutralized, a polymerization initiator, and a first crosslinking agent;
   performing a first foaming of a mixture which is obtained by mixing the monomer composition with a first foaming agent and a foam stabilizer;
   performing a second foaming of a mixture which is obtained by mixing the first foamed mixture with a second foaming agent;
   forming a water-containing gel polymer by crosslinking-polymerizing the second foamed mixture;
   forming a base polymer powder by drying, pulverizing, and classifying the water-containing gel polymer; and
   crosslinking at least part of the surface of the base polymer powder in the presence of a surface crosslinking agent.

2. The method of claim 1, wherein a concentration of the foam stabilizer with respect to the total weight of the mixture in the first foaming step is higher than a concentration of the foam stabilizer with respect to the total weight of the mixture in the second foaming step.

3. The method of claim 1, wherein the foam stabilizer is included in an amount of 0.02% by weight to 1.0% by weight with respect to the total weight of the mixture in the first foaming step, and the concentration of the foam stabilizer in the second foaming step is lower than that in the first foaming step.

4. The method of claim 1, wherein the foam stabilizer is a hydrophilic surface-modified compound.

5. The method of claim 1, wherein the foam stabilizer is a compound which is obtained by hydrophilic surface-modification of a hydrophobic compound with one or more polymers selected from the group consisting of polyethylene glycol, polyvinyl alcohol, polyvinylpyrrolidine, polyvinyl acetate, polyvinylpyrrolidine polyacrylic acid, polyacrylamide, polydopamine, poly(4-styrenesulfonate) polyethylene glycol, and polypropylene glycol, or a copolymer thereof.

6. The method of claim 1, wherein the first foaming agent and the second foaming agent are each independently foamed at 50°C or lower.

7. The method of claim 1, wherein the first foaming agent and the second foaming agent are each independently one or more selected from the group consisting of sodium carbonate, sodium bicarbonate, potassium bicarbonate, azodicarbonamide, p,p'-oxybisbenzenesulfonyl hydrazide, dinitrosopentamethylenetetramine, p-toluenesulfonyl hydrazide, and benzenesulfonyl hydrazide.

8. The method of claim 1, wherein a monomer composition including the water-soluble acrylic acid-based monomer having acidic groups of which at least part is neutralized, the polymerization initiator, and the first crosslinking agent is further mixed in the second foaming step.

9. The method of claim 1, wherein the first foaming step and the second foaming step are each independently performed at 35°C to 50°C.

10. The method of claim 1, wherein microbubbles having a diameter of 100 nm or less are generated in the first foaming step, and
bubbles having a diameter of 100 nm to 300 nm are generated in the second foaming step.

11. The method of claim 1, wherein the crosslinking polymerizing step is performed at 50°C to 100°C.

12. The method of claim 1, wherein the superabsorbent polymer includes a plurality of pores,

the plurality of pores have an average diameter of 20 $\mu$m to 150 $\mu$m, and
micropores having a diameter of 2 $\mu$m to 180 $\mu$m is 70% or more in the plurality of pores.

【Fig 1】

【Fig 2】

(a)

(b)

【Fig 3】

【Fig 4】

【Fig 5】

【Fig 6】

<div align="center">

**INTERNATIONAL SEARCH REPORT**

</div>

| | International application No. |
|---|---|
| | **PCT/KR2022/010412** |

| A. | CLASSIFICATION OF SUBJECT MATTER |
|---|---|

**C08J 3/24**(2006.01)i; **C08J 9/04**(2006.01)i; **C08F 220/06**(2006.01)i; **C08K 9/04**(2006.01)i

According to International Patent Classification (IPC) or to both national classification and IPC

| B. | FIELDS SEARCHED |
|---|---|

Minimum documentation searched (classification system followed by classification symbols)

C08J 3/24(2006.01); A61F 2/04(2006.01); A61K 9/10(2006.01); C08F 2/10(2006.01); C08F 20/06(2006.01); C08F 20/10(2006.01); C08J 9/04(2006.01); C08K 7/00(2006.01); C08L 23/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 발포제(foaming agent), 기포 안정화제(foam stabilizer), 함수겔(hydrogel), 발포 (foaming), 표면 가교(surface crosslinking), 고흡수성 수지(super absorbent polymer, SAP)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2017-0075624 A (LG CHEM, LTD.) 03 July 2017 (2017-07-03) See abstract; paragraphs [0036], [0072], [0073], [0090] and [0101]; and claims 11-13. | 1,4-9,11 |
| A | | 2,3,10,12 |
| Y | KR 10-2016-0063956 A (LG CHEM, LTD.) 07 June 2016 (2016-06-07) See abstract; paragraphs [0014]-[0016]; and claims 8-11. | 1,4-9,11 |
| Y | US 2001-0038831 A1 (PARK, K. et al.) 08 November 2001 (2001-11-08) See abstract; and paragraph [0064]. | 4,5 |
| A | KR 10-2015-0008055 A (KIMBERLY-CLARK WORLDWIDE, INC.) 21 January 2015 (2015-01-21) See entire document. | 1-12 |
| A | US 2009-0291115 A1 (GEMEINHART, R. A.) 26 November 2009 (2009-11-26) See entire document. | 1-12 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 October 2022** | **01 November 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/010412** |

## C.    DOCUMENTS CONSIDERED TO BE RELEVANT

| Category* | Citation of document, with indication, where appropriate, of the relevant passages | Relevant to claim No. |
| --- | --- | --- |
| A | US 2004-0224021 A1 (OMIDIAN, H. et al.) 11 November 2004 (2004-11-11)<br>    See entire document. | 1-12 |

Form PCT/ISA/210 (second sheet) (July 2022)

## INTERNATIONAL SEARCH REPORT
### Information on patent family members

International application No.

**PCT/KR2022/010412**

| Patent document cited in search report | | | Publication date (day/month/year) | Patent family member(s) | | | Publication date (day/month/year) |
|---|---|---|---|---|---|---|---|
| KR | 10-2017-0075624 | A | 03 July 2017 | CN | 107406623 | A | 28 November 2017 |
| | | | | CN | 107406623 | B | 27 September 2019 |
| | | | | EP | 3252097 | A1 | 06 December 2017 |
| | | | | EP | 3252097 | B1 | 02 June 2021 |
| | | | | US | 11192088 | B2 | 07 December 2021 |
| | | | | US | 2018-0043332 | A1 | 15 February 2018 |
| | | | | WO | 2017-111210 | A1 | 29 June 2017 |
| KR | 10-2016-0063956 | A | 07 June 2016 | CN | 105980464 | A | 28 September 2016 |
| | | | | CN | 105980464 | B | 18 June 2019 |
| | | | | DE | 202015009630 | U1 | 26 September 2018 |
| | | | | EP | 3098245 | A1 | 30 November 2016 |
| | | | | EP | 3098245 | B1 | 15 July 2020 |
| | | | | US | 10065175 | B2 | 04 September 2018 |
| | | | | US | 2016-0354757 | A1 | 08 December 2016 |
| | | | | US | 2018-0178193 | A1 | 28 June 2018 |
| | | | | US | 9950309 | B2 | 24 April 2018 |
| | | | | WO | 2016-085294 | A1 | 02 June 2016 |
| US | 2001-0038831 | A1 | 08 November 2001 | AT | 300999 | T | 15 August 2005 |
| | | | | AU | 6932698 | A | 08 December 1998 |
| | | | | AU | 736940 | B2 | 09 August 2001 |
| | | | | BR | 9809815 | A | 27 June 2000 |
| | | | | CA | 2289756 | A1 | 19 November 1998 |
| | | | | CA | 2289756 | C | 11 March 2008 |
| | | | | CN | 1264321 | A | 23 August 2000 |
| | | | | DE | 69831074 | T2 | 24 May 2006 |
| | | | | EP | 0988108 | A1 | 29 March 2000 |
| | | | | EP | 0988108 | B1 | 03 August 2005 |
| | | | | JP | 2002-501563 | A | 15 January 2002 |
| | | | | US | 6271278 | B1 | 07 August 2001 |
| | | | | WO | 98-51408 | A1 | 19 November 1998 |
| KR | 10-2015-0008055 | A | 21 January 2015 | AU | 2013-246628 | A1 | 17 October 2013 |
| | | | | AU | 2013-246628 | A1 | 25 September 2014 |
| | | | | AU | 2013-246628 | B2 | 16 June 2016 |
| | | | | CN | 104220501 | A | 17 December 2014 |
| | | | | EP | 2836542 | A1 | 18 February 2015 |
| | | | | EP | 2836542 | B1 | 02 November 2016 |
| | | | | MX | 2014012293 | A | 21 November 2014 |
| | | | | RU | 2014142366 | A | 10 June 2016 |
| | | | | US | 2013-0274349 | A1 | 17 October 2013 |
| | | | | WO | 2013-153468 | A1 | 17 October 2013 |
| US | 2009-0291115 | A1 | 26 November 2009 | US | 8414879 | B2 | 09 April 2013 |
| US | 2004-0224021 | A1 | 11 November 2004 | AU | 2004-233805 | A1 | 11 November 2004 |
| | | | | AU | 2004-233805 | B2 | 21 June 2007 |
| | | | | CA | 2523246 | A1 | 11 November 2004 |
| | | | | CA | 2523246 | C | 01 December 2009 |
| | | | | CA | 2638788 | A1 | 11 November 2004 |
| | | | | EP | 1620076 | A2 | 01 February 2006 |
| | | | | EP | 1620076 | A4 | 25 August 2010 |
| | | | | JP | 2006-524742 | A | 02 November 2006 |

Form PCT/ISA/210 (patent family annex) (July 2022)

**INTERNATIONAL SEARCH REPORT**
**Information on patent family members**

International application No.

**PCT/KR2022/010412**

| Patent document cited in search report | Publication date (day/month/year) | Patent family member(s) | | Publication date (day/month/year) |
|---|---|---|---|---|
| | | JP 4869066 B2 | | 01 February 2012 |
| | | MX PA05011311 A | | 12 December 2005 |
| | | US 7056957 B2 | | 06 June 2006 |
| | | WO 2004-096127 A2 | | 11 November 2004 |
| | | WO 2004-096127 A3 | | 12 May 2005 |

Form PCT/ISA/210 (patent family annex) (July 2022)

**EP 4 342 934 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210093471
- KR 1020220087601

**Non-patent literature cited in the description**

- UV Coatings: Basics, Recent Developments and New Application. Elsevier, 2007, 115
- Principle of Polymerization. Wiley, 1981, 203